# EUROPÄISCHE PATENTSCHRIFT

(11) **EP 0 818 634 B1**
(45) Veröffentlichungstag und Bekanntmachung des Hinweises auf die Patenterteilung: **16.04.2003**
(21) Anmeldenummer: 97110469.0
(22) Anmeldetag: 26.06.1997
(51) Int. Cl.: F16C 11/06

(54) **Kugelgelenk für ein Kraftfahrzeug**
Ball joint for automotive vehicle
Articulation à rotule pour véhicule automobile

(30) Priorität: 12.07.1996 DE 19628191
(43) Veröffentlichungstag der Anmeldung: 14.01.1998
(73) Patentinhaber: Volkswagen Aktiengesellschaft, 38436 Wolfsburg (DE)
(72) Erfinder: Huk, Andre, 38110 Braunschweig (DE); Ott, Klaus, 30823 Weyhe (DE)

(56) Entgegenhaltungen:
- DE-A- 4 223 166
- DE-A- 4 419 954
- DE-A- 19 546 233
- DE-U- 9 204 269
- DE-U- 9 419 741

## Beschreibung

Die Erfindung bezieht sich auf ein Kugelgelenk für ein Kraftfahrzeug gemäß dem Oberbegriff von Anspruch 1 und ein Verfahren zum Herstellen eines derartigen Kugelgelenks gemäß dem Oberbegriff von Anspruch 9.

Ein derartiges Kugelgelenk ist aus der DE 44 19 954 A1 bekannt. Um die Funktionsfähigkeit des Kugelgelenks auch bei hohen axialen Belastungen, wie sie z. B. im Fahrwerksbereich eines Kraftfahrzeugs auftreten, zu gewährleisten, muß die Gelenkkugel mit einer hohen axialen Verspannung gegenüber dem Gehäuse bzw. der an dem Gehäuse fixierten Lagerschale verspannt werden. In der DE 44 19 954 A1 wird hierzu ein Verschlußring auf das Gehäuse und die Kunststoff-Lagerschale aufgesetzt, der eine axiale Sicherung der Gelenkkugel bewirkt. Durch anschließendes Umlegen eines oberen Gehäuserandes auf den Verschlußring wird die notwendige axiale Verspannung des Verschlußrings gegen die Lagerschale und das Gehäuse erreicht. Das untere Ende des Dichtbalgs, der ein Eindringen von Feuchtigkeit und Schmutz in das Kugellager verhindern soll, wird anschließend in eine außen umlaufende Nut des Verschlußrings gezogen und durch einen aufgesetzten Sicherungsring radial in die Nut des Verschlußrings gedrückt. Somit wird die Grenzfläche zwischen dem Dichtbalg und dem Verschlußring durch die radiale Anpreßkraft des Metallrings abgedichtet. Die Grenzfläche zwischen dem Dichtbalg und dem Bördelrand des Gehäuses wird durch die Anlagekraft des Dichtbalgs aufgrund dessen Elastizität abgedichtet.

Nachteilig an diesem Kugelgelenk ist jedoch der aufwendige Aufbau, für den eine Abdichtung des Verschlußrings und eine Abdichtung des unteren Faltenbalgendes durch den Sicherungsring erforderlich ist.

Der Erfindung liegt die Aufgabe zugrunde, ein Kugelgelenk zu schaffen, das einfach und kostengünstig hergestellt werden kann, eine hohe axiale Verspannung des Verschlußrings gegenüber dem Gehäuse gewährleistet und dennoch eine gute Abdichtung des Kugelgelenks gegenüber dem Außenraum erreicht. Weiterhin soll ein kostengünstiges und einfaches Verfahren zum Herstellen eines derartigen Kugelgelenks geschaffen werden.

Diese Aufgabe wird durch ein Kugelgelenk nach Anspruch 1 sowie ein Verfahren zum Herstellen eines derartigen Kugelgelenks nach Anspruch 9 erreicht. Die Unteransprüche beschreiben bevorzugte Weiterbildungen des erfindungsgemäßen Kugelgelenks und des erfindungsgemäßen Verfahrens.

Erfindungsgemäß ist somit vorgesehen, daß das untere Ende des Dichtbalgs ebenfalls durch den umgelegten Gehäuserand fixiert und gegen den Verschlußring verspannt wird. Somit kann erfindungsgemäß auf die Verwendung eines zusätzlichen Sicherungsrings zur Fixierung und radialen Verspannung des Verschlußrings verzichtet werden, wodurch die Bauteilanzahl des Kugelgelenks und somit die Herstellungskosten verringert werden. Weiterhin wird ein einfaches und kostengünstiges Herstellungsverfahren ermöglicht, indem nach Einsetzen der Gelenkkugel mit Lagerschale in das Gehäuse der Verschlußring mit aufgesetztem Faltenbalg auf das Gehäuse und die Lagerschale aufgesetzt werden kann und durch das Einbördeln des Gehäuserandes gleichzeitig sowohl die axiale Verspannung des Verschlußrings gegenüber der Lagerschale und dem Gehäuse sichergestellt wird, als auch eine gute Dichtwirkung des Faltenbalgs durch eine hohe Anpreßkraft des Dichtbalgs gegenüber dem Gehäuserand und dem Verschlußring erreicht wird.

Dabei wird eine besonders gute Abdichtung des unteren Dichtbalgendes gegenüber dem Verschlußring und dem Gehäuserand erreicht, wenn nach Anspruch 2 dieses untere Ende mit einer Verdickung ausgebildet wird. Durch die Ausbildung einer Nut im Verschlußring nach Anspruch 3, in die das untere Dichtbalgende eingezogen wird, kann eine große Dichtfläche des Dichtbalgendes gegenüber dem Verschlußring erreicht werden, da der umgelegte Gehäuserand von außen gegen das Dichtbalgende drückt und somit das Dichtbalgende in die Nut hineindrückt. Dabei lassen sich durch entsprechende Ausbildung der Nut nach Anspruch 4 bzw. 6 drei oder vier Dichtflächen des Balgendes gegenüber dem Verschlußring erreichen.

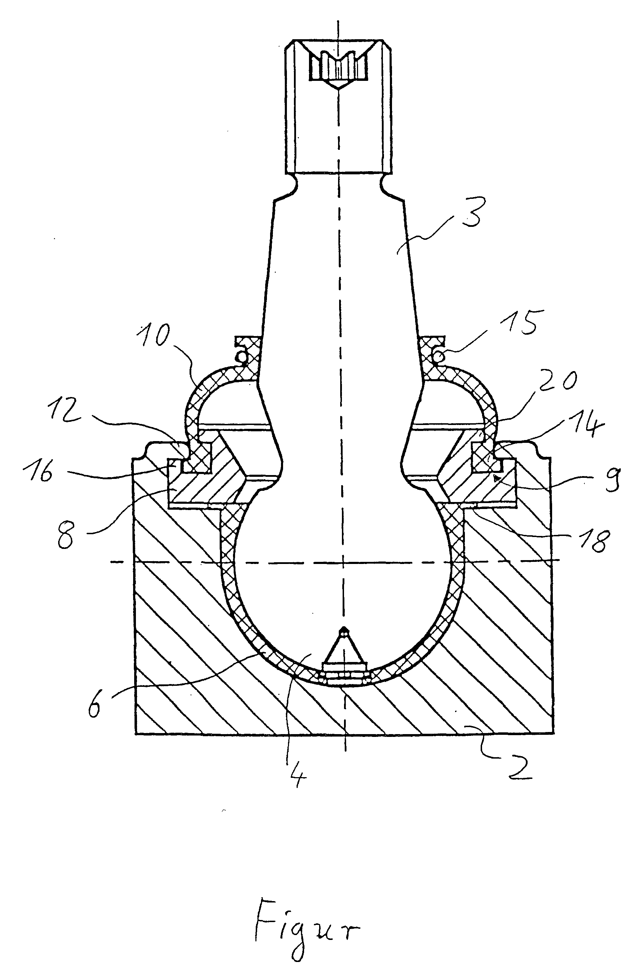

Die Erfindung wird im folgenden an einer Ausführungsform anhand der beiliegenden Zeichnung näher erläutert. Die Figur zeigt eine teilweise geschnittene Darstellung des Kugelgelenks gemäß der Ausführungsform.

Gemäß der Figur ist eine Gelenkkugel 4 mit Kugelzapfen 3 in eine Lagerschale 6 in einem Gehäuse 2 eingesetzt. Auf das Gehäuse 2 und die Lagerschale 6 ist ein Verschlußring 8 aufgesetzt, dessen innerer Rand den Ausschlagwinkel des Kugelzapfens 3 begrenzt. In eine Nut 9 des Verschlußrings 8 ist das als Wulst 14 ausgebildete untere Ende eines Faltenbalgs 10 eingesetzt, dessen oberes Ende mit einem Sicherungsring 15 gegen den Kugelzapfen 3 abgedichtet ist. Die Nut 9 in dem Verschlußring 8 ist von einem äußeren Vorsprung 16 und an ihrer Oberseite teilweise von einem oberen Rand 20 des Verschlußrings umgeben, so daß der Wulst in der rechteckigen Nut 9 von zwei Seiten ganz und von zwei weiteren Seiten teilweise umgeben wird. Ein Bördelrand 12 des Gehäuses 2 ist um den Vorsprung 16 des Verschlußrings gelegt und verspannt den Verschlußring gegen die Lagerschale 6 und das Gehäuse 2 in axialer Richtung. Der Bördelrand 12 drückt weiterhin den Wulst 14 in die Nut 9 des Verschlußrings, so daß der Wulst gegen die Seitenflächen des oberen Rads 20 sowie die Seitenfläche und untere Fläche der Nut 9 gedrückt wird. Somit wird der Dichtbalg 10 an seinem unteren Ende durch die Dichtflächen des Wulst 14 gegen den Verschlußring 20 und den Bördelrand 12 abgedichtet, wobei durch den Bördelrand eine hohe in die Nut hineinweisende Kraft bewirkt wird, die im wesentlichen in radialer Richtung, aber auch teilweise in der Figur nach unten weist, so daß auch eine Verspannung des Wulsts gegen die untere Dichtfläche der Nut erreicht wird. Es bildet sich somit ein Dichtlabyrinth aus den verschiedenen Dichtflächen des Wulst 14 gegen den Verschlußring 8 sowie die Dichtfläche des Wulsts gegen den Bördelrand 12.

Zur Herstellung des erfindungsgemäßen Kugelgelenks wird zuerst die Gelenkkugel 4 in die Lagerschale 6 aus Kunststoff eingeclipst und der Kugelzapfen mit Gelenkkugel anschließend in das Gehäuse 2 axial eingesetzt. Das untere Ende des Dichtbalgs 10 wird in die Nut 9 des Verschlußrings 8 eingezogen und der Verschlußring mit dem aufgezogenen Dichtbalg nachfolgend auf die Lagerschale 6 aufgesetzt. Anschließend wird der obere Gehäuserand zu einem Bördelrand 12 verrollt, wodurch der Verschlußring 8 gegen die Lagerschale 6 und das Gehäuse 2 axial verspannt wird. Gleichzeitig wird durch den Verrollvorgang der Wulst 14 in die Nut 9 gedrückt und bewirkt eine Dichtung mit hoher Anpreßkraft.

Das Gehäuse 2 und der Verschlußring 8 können aus einem Leichtmetall, wie z. B. Aluminium hergestellt werden.

## Patentansprüche

1. Kugelgelenk für ein Kraftfahrzeug, mit
einem oben offenen Gehäuse (2) mit zumindest teilweise sphärischer Innenfläche, in das eine mit einem Kugelzapfen (3) verbundene Gelenkkugel (4) und eine diese umgebende Lagerschale (6) eingesetzt sind,
einem Verschlußring (8), der auf die Lagerschale (6) aufgesetzt und durch Umlegen eines oberen Gehäuserands (12) mit der Lagerschale (6) und dem Gehäuse (2) direkt in axialer Richtung verspannt ist, und
einem Dichtbalg (10), dessen oberes Ende an dem Kugelzapfen (3) und dessen unteres Ende (14) am Verschlußring (8) dichtend angebracht ist,
**dadurch gekennzeichnet, daß**
das untere Ende (14) des Dichtbalgs (10) durch den umgelegten Gehäuserand (12) fixiert und gegen den Verschlußring (8) verspannt ist.

2. Kugelgelenk nach Anspruch 1, **dadurch gekennzeichnet, daß** das untere Ende des Dichtbalgs (10) eine Verdickung (14) aufweist.

3. Kugelgelenk nach Anspruch 1 oder 2, **dadurch gekennzeichnet, daß** das untere Ende (14) des Dichtbalgs (10) in einer Nut (9) des Verschlußrings (8) liegt und durch den umgelegten Gehäuserand (12) in die Nut gedrückt ist.

4. Kugelgelenk nach Anspruch 3, **dadurch gekennzeichnet, daß** das untere Ende (14) des Dichtbalgs (10) von einem Vorsprung (16) des Verschlußrings (8) umgeben ist derartig, daß das untere Ende (14) an mindestens drei Seiten von dem Verschlußring (8) umgeben ist.

5. Kugelgelenk nach Anspruch 4, **dadurch gekennzeichnet, daß** der umgelegte Rand (12) des Gehäuses um den Vorsprung (16) des Verschlußrings gelegt.

6. Kugelgelenk nach Anspruch 4 oder 5, **dadurch gekennzeichnet, daß** das untere Ende (14) des Dichtbalgs an einer vierten Seite zumindest teilweise von einem oberen Rand (20) des Verschlußrings (8) umgeben ist.

7. Kugelgelenk nach einem der Ansprüche 1 bis 6, **dadurch gekennzeichnet, daß** die Gelenkkugel (4) in die Lagerschale (6) eingeclipst ist.

8. Kugelgelenk nach einem der Ansprüche 1 bis 7, **dadurch gekennzeichnet, daß** das Gehäuse (2) und der Verschlußring (8) aus einem Leichtmetall, vorzugsweise Aluminium oder einer Aluminiumlegierung hergestellt sind.

9. Verfahren zum Herstellen eines Kugelgelenks für ein Kraftfahrzeug, insbesondere eines Kugelgelenks nach einem der Ansprüche 1 bis 8, **dadurch gekennzeichnet, daß**
eine Gelenkkugel (4) mit einer sie umgebenden Lagerschale (6) in ein einseitig offenes Gehäuse (2) eingeführt wird,
ein Verschlußring (8) mit einem unteren Ende (14) eines Dichtbalgs (10) versehen und auf das Gehäuse aufgesetzt wird, und
ein Gehäuserand (12) derartig umgelegt wird, daß der Verschlußring (8) mit der Lagerschale (6) und dem Gehäuse (2) fixiert und verspannt wird, und das untere Ende (14) des Dichtbalgs an dem Verschlußrings fixiert und mit diesem verspannt wird.

10. Verfahren nach Anspruch 9, insbesondere zum Herstellen eines Kugelgelenks nach Anspruch 3, **dadurch gekennzeichnet, daß** das untere Ende (14) des Dichtbalgs in eine Nut (9) des Verschlußrings (8) eingezogen wird und durch das Umlegen des Gehäuserands (12) in die Nut hineingedrückt wird.

## Claims

1. Ball joint for a motor vehicle, having
a housing (2) which is open at the top, has at least a partially spherical inner surface and into which a joint ball (4), which is connected to a ball journal (3), and a bearing shell (6), which surrounds the ball, are inserted,
a closure ring (8), which is fitted onto the bearing shell (6) and is clamped directly in the axial direction to the bearing shell (6) and the housing (2) as a result of an upper housing edge (12) being flanged over, and
a sealing bellows (10), the upper end of which is arranged in a sealed manner against the ball journal (3) and the lower end (14) of which is arranged in a sealed manner on the closure ring (8),
**characterized in that** the lower end (14) of the sealing bellows (10) is fixed by the flanged-over housing edge (12) and is clamped against the closure ring (8).

2. Ball joint according to Claim 1, **characterized in that** the lower end of the sealing bellows (10) has a thickened section (14).

3. Ball joint according to Claim 1 or 2, **characterized in that** the lower end (14) of the sealing bellows (10) lies in a groove (9) in the closure ring (8) and is pressed into the groove by the flanged housing edge (12).

4. Ball joint according to Claim 3, **characterized in that** the lower end (14) of the sealing bellows (10) is surrounded by a projection (16) of the closure ring (8), in such a manner that the lower end (14) is surrounded by the closure ring (8) on at least three sides.

5. Ball joint according to Claim 4, **characterized in that** the flanged edge (12) of the housing is laid around the projection (16) of the closure ring.

6. Ball joint according to Claim 4 or 5, **characterized in that** the lower end (14) of the sealing bellows is at least partially surrounded by an upper edge (20) of the closure ring (8) on a fourth side.

7. Ball joint according to one of Claims 1 to 6, **characterized in that** the joint ball (4) is clipped into the bearing shell (6).

8. Ball joint according to one of Claims 1 to 7, **characterized in that** the housing (2) and the closure ring (8) are made from a light metal, preferably aluminium or an aluminium alloy.

9. Process for producing a ball joint for a motor vehicle, in particular a ball joint according to one of Claims 1 to 8, **characterized in that** a joint ball (4) with a bearing shell (6) surrounding it is introduced into a housing (2) which is open on one side,
a closure ring (8) is provided with a lower end (14) of a sealing bellows (10) and is fitted onto the housing, and
a housing edge (12) is flanged over in such a manner that the closure ring (8) is fixed and clamped to the bearing shell (6) and the housing (2), and the lower end (14) of the sealing bellows is fixed to the closure ring and clamped thereto.

10. Process according to Claim 9, in particular for producing a ball joint according to Claim 3, **characterized in that** the lower end (14) of the sealing bellows is drawn into a groove (9) in the closure ring (8) and is pressed into the groove as a result of the housing edge (12) being flanged over.

## Revendications

1. Articulation à rotule pour véhicule automobile, comprenant
un boîtier (2) ouvert en haut avec des faces internes au moins partiellement sphériques, dans lequel sont insérées une rotule d'articulation (4) connectée à un boulon à rotule (3) et une coque de logement (6) entourant celle-ci,
un anneau de fermeture (8), qui est placé sur la coque de logement (6) et qui est serré directement dans la direction axiale avec la coque de logement (6) et le boîtier (2) par rabattement d'un bord supérieur (12) du boîtier, et
un soufflet d'étanchéité (10) dont l'extrémité supérieure est appliquée de manière hermétique contre le boulon à rotule (3) et dont l'extrémité inférieure (14) est appliquée de manière hermétique contre l'anneau de fermeture (8),
**caractérisée en ce que**
l'extrémité inférieure (14) du soufflet d'étanchéité (10) est fixée par le bord rabattu (12) du boîtier et est serrée contre l'anneau de fermeture (8).

2. Articulation à rotule selon la revendication 1, **caractérisée en ce que** l'extrémité inférieure du soufflet d'étanchéité (10) présente un renflement (14).

3. Articulation à rotule selon la revendication 1 ou 2, **caractérisée en ce que** l'extrémité inférieure (14) du soufflet d'étanchéité (10) se trouve dans une rainure (9) de l'anneau de fermeture (8) et est pressée dans la rainure par le bord rabattu (12) du boîtier.

4. Articulation à rotule selon la revendication 3, **caractérisée en ce que** l'extrémité inférieure (14) du soufflet d'étanchéité (10) est entourée par une saillie (16) de l'anneau de fermeture (8) de telle sorte que l'extrémité inférieure (14) soit entourée sur au moins trois côtés par l'anneau de fermeture (8).

5. Articulation à rotule selon la revendication 4, **caractérisée en ce que** le bord rabattu (12) du boîtier est rabattu autour de la saillie (16) de l'anneau de fermeture.

6. Articulation à rotule selon la revendication 4 ou 5, **caractérisée en ce que** l'extrémité inférieure (14) du soufflet d'étanchéité est entourée sur un quatrième côté au moins partiellement par un bord supérieur (20) de l'anneau de fermeture (8).

7. Articulation à rotule selon l'une quelconque des revendications 1 à 6, **caractérisée en ce que** la rotule d'articulation (4) est enclipsée dans la coque de logement (6).

8. Articulation à rotule selon l'une quelconque des revendications 1 à 7, **caractérisée en ce que** le boîtier (2) et l'anneau de fermeture (8) sont fabriqués en un métal léger, de préférence de l'aluminium ou un alliage d'aluminium.

9. Procédé de fabrication d'une articulation à rotule pour véhicule automobile, en particulier d'une articulation à rotule selon l'une quelconque des revendications 1 à 8, **caractérisé en ce qu'**une rotule d'articulation (4) avec une coque de logement (6) l'entourant est insérée dans un boîtier (2) ouvert d'un côté, un anneau de fermeture (8) est pourvu d'une extrémité inférieure (14) d'un soufflet d'étanchéité (10) et est posé sur le boîtier et
un bord de boîtier (12) est rabattu de telle manière que l'anneau de fermeture (8) soit fixé et serré avec la coque de logement (6) et le boîtier (2), et l'extrémité inférieure (14) du soufflet d'étanchéité est fixée à l'anneau de fermeture et serrée avec celui-ci.

10. Procédé selon la revendication 9, en particulier pour la fabrication d'une articulation à rotule selon la revendication 3, **caractérisé en ce que** l'extrémité inférieure (14) du soufflet d'étanchéité est rentrée dans une rainure (9) de l'anneau de fermeture (8) et est enfoncée par le rabattement du bord (12) du boîtier dans la rainure.
